(19) Europäisches Patentamt / European Patent Office / Office européen des brevets

(11) **EP 3 816 616 A1**

(12) **EUROPEAN PATENT APPLICATION**
published in accordance with Art. 153(4) EPC

(43) Date of publication:
**05.05.2021 Bulletin 2021/18**

(51) Int Cl.:
***G01N 23/16*** (2018.01)

(21) Application number: **19824880.9**

(22) Date of filing: **26.06.2019**

(86) International application number:
**PCT/JP2019/025288**

(87) International publication number:
**WO 2020/004435 (02.01.2020 Gazette 2020/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.06.2018 JP 2018121994**

(71) Applicant: **Toray Industries, Inc.**
**Tokyo, 103-8666 (JP)**

(72) Inventor: **WATANABE, Mitsuru**
**Nasushiobara-shi, Tochigi 329-2763 (JP)**

(74) Representative: **Hoefer & Partner Patentanwälte mbB**
**Pilgersheimer Straße 20**
**81543 München (DE)**

(54) **RADIATION TRANSMISSION INSPECTION METHOD AND DEVICE, AND METHOD FOR MANUFACTURING MICROPOROUS FILM**

(57) When an X-ray transmission inspection is performed on a film reel as an inspection object including a long film wound on an outer peripheral surface of a core a plurality of times, a foreign body can be reliably detected while the influence of a difference in detection sensitivity depending on the position of the foreign body is reduced. A radiation transmission inspection method comprises: when one side surface of the reel is a side end A and another side surface is a side end B, a first foreign body detection process in which radiation emitted from a first radiation source, incident from the side end A of the film reel, transmitted through the reel, and exited from the side end B is detected by a first detector, and information regarding a foreign body is obtained; and a second foreign body detection process in which radiation emitted from a second radiation source, incident from the side end B of the film reel, transmitted through the reel, and exited from the side end A is detected by a second detector, and information regarding a foreign body is obtained.

【 FIG. 4 】

EP 3 816 616 A1

**Description**

TECHNICAL FIELD

The present invention relates to a radiation transmission inspection method and device for inspecting a foreign body mixed in a film reel on which a film has been wound, and a method for manufacturing a microporous film including such a radiation transmission inspection method.

BACKGROUND ART

In general, films such as various polymer films are supplied as a film raw material in a state of being wound on a cylindrical core. When a foreign body such as a small metal piece is mixed in such a film reel, the foreign body may cause a defect in a product manufactured using the film. For example, in cases where a film unwound from a film reel is used as a battery separator film inserted between a positive electrode and a negative electrode of a lithium ion secondary battery, when a foreign body mixed in the film reel is a small metal piece, it causes a short circuit between a positive electrode and a negative electrode in a lithium ion secondary battery, or the metal piece is dissolved in an electrolytic solution to deteriorate battery characteristics. Therefore, it is necessary to detect whether or not a small metal foreign body has been mixed in the film reel. From the viewpoint of quality assurance in the manufacture of a battery separator film, it is preferable to inspect the film reel, which is the final product, for the presence or absence of a foreign body, rather than during the manufacture of the film.

Films such as battery separator films are polymer films, and a foreign body to be detected is metal. Therefore, as a method for detecting a metal foreign body in the film reel, a radiation transmission inspection method in which radiation such as X-rays or γ-rays is emitted from the outside of the film reel to detect, as an image, a shadow of the foreign body that does not easily transmit the radiation is an effective method. When detecting a foreign body, it is preferable to detect the presence position of the foreign body in the film reel in addition to the presence or absence of the foreign body.

Patent Document 1 does not relate to detection of a foreign body in a film reel, but is a method to detect the number of seams in a state in which a label continuous body formed by joining two or more long label base materials by a metal coupling member is wound in the form of a roll. It discloses that the number of seams is detected based on the difference in the amount of X-ray transmission between the label base material portions and the coupling member portion by emitting X-rays from a side end of the roll.

On the other hand, as a method for determining a spatial arrangement of an object using X-rays, an X-ray CT (computed tomography) method is known. In the X-ray CT method, X-rays are emitted from various directions to take an image, and a three-dimensional image is obtained by image synthesis technology. Therefore, it takes a long time for measurement. Patent Document 2 discloses a technique for shortening the measurement time by X-ray CT by arranging the same number of multiple sources and detectors in a translational scanning direction and performing translational scanning between adjacent sources to reduce the distance of the translation scanning, thereby shortening the measurement time.

PRIOR ART DOCUMENTS

PATENT DOCUMENTS

Patent Document 1: Japanese Patent Laid-open Publication No. 2015-44602
Patent Document 2: Japanese Patent Laid-open Publication No. 63-21039

SUMMARY OF THE INVENTION

PROBLEMS TO BE SOLVED BY THE INVENTION

In X-ray transmission inspection, an inspection object is arranged between an X-ray source and a detector such as an imaging plate, and X-rays are discharged from the X-ray source in a conical shape or a pyramidal shape around the optical axis (irradiation center axis). When the inspection object is larger than an X-ray irradiation field of view (irradiation range emitted from the X-ray source, the X-ray source and detector need to be scanned depending on the inspection object so that the inspection object is entirely inspected. Here, when the inspection target has a thickness in the X-ray transmission direction, depending on the position in thickness direction of a foreign body of the same size, the size of an image on the detector varies, and the detection sensitivity varies depending on the position of the foreign body. This is because the size of the image of the foreign body projected on the detector is enlarged as it is closer to the X-ray source and farther from the detector, and the image is largely projected on the detector. Since the detection sensitivity of the detector becomes capable of detection when the number of pixels of the image exceeds a predetermined value, it depends on the size of the image projected on the detector. Therefore, when the position of the foreign body is close to the X-ray source, the detection is easy, and the detection sensitivity increases, and when the position of the foreign body is far from the X-ray source, the detection is difficult, and the detection sensitivity is reduced.

In order to reduce the variation in detection sensitivity depending on the position in the thickness direction, it is sufficient if the ratio of the distance from the radiation source to the inspection object to the distance from the radiation source to the detector is increased. However, in consideration of the thickness of the inspection object, in order to increase this ratio, it is necessary to increase the distance itself from the radiation source to the detector, and as a result, the attenuation of X-rays can increase and the required sensitivity cannot be obtained. That is, in the case of an inspection object having a thickness in the X-ray transmission direction, it was not possible to suppress sensitivity variations due to the position of a foreign body in the thickness direction with high detection sensitivity. Therefore, there was a problem that the size of the foreign body detected varies depending on the position of the foreign body in the thickness direction (this is referred to as sensitivity variation), and it is not possible to specify the position of the foreign body in the inspection object and the actual size of the foreign body.

On the other hand, inspection by X-ray CT can easily specify the shape and position of a foreign body, but there is a problem that it requires a complicated rotating mechanism and image processing system and takes much longer measurement time and processing time than X-ray transmission inspection.

An object of the present invention is to provide an X-ray transmission inspection method and device capable of reliably detecting a foreign body by reducing the influence of variations in detection sensitivity depending on the position of the foreign body when an X-ray transmission inspection is performed using a film reel as an inspection object, and a method for manufacturing a microporous film manufactured using the X-ray transmission inspection method.

SOLUTIONS TO THE PROBLEMS

The present invention is a radiation transmission inspection method for inspecting a film reel including a long film wound on an outer peripheral surface of a core a plurality of times, wherein one side surface of the reel is a side end A and another side surface is a side end B, the method comprising:

a first foreign body detection process in which radiation emitted from a first radiation source, incident from the side end A of the film reel, transmitted through the film reel, and exited from the side end B is detected by a first detector, and information regarding a foreign body is obtained; and

a second foreign body detection process in which radiation emitted from a second radiation source, incident from the side end B of the film reel, transmitted through the film reel, and exited from the side end A is detected by a second detector, and information regarding a foreign body is obtained.

Furthermore, it is the radiation transmission inspection method wherein a distance (FID) between the first radiation source and the first detector is equal to a distance (FID) between the second radiation source and the second detector, and

a distance (FOD) between the first radiation source and the side end A is equal to a distance (FOD) between the second radiation source and the side end B. Furthermore, it is the radiation transmission inspection method characterized by satisfying Formula (1) below

$$0.2 \leq (T + 2FOD)/2FID \leq 0.5 \cdots (1)$$

where T represents a thickness of the film reel.

Furthermore, it is the radiation transmission inspection method according to claim 1 or 2, determining position information and a size of the foreign body mixed in the film reel.

Furthermore, it is the radiation transmission inspection method wherein position information of the foreign body and a size of the foreign body mixed in the film reel are determined from foreign body information obtained from the first foreign body detection process and foreign body information obtained from the second foreign body detection process.

The present invention provides a radiation transmission inspection device capable of inspecting a film reel including a long film wound on an outer peripheral surface of a core a plurality of times, wherein one side surface of the reel is a side end A and another side surface is a side end B, the device comprising: a holding portion configured to grip the core of the film reel; a first measurement portion including a first radiation source for emitting radiation arranged to be incident from the side end A of the film reel, transmitted through the reel, and exited from the side end B, and a first detector for detecting the radiation exited from the side end B; and a second measurement portion including a second radiation source that is provided at a position separated from the first detector and is arranged so that radiation is incident from the side end B of the film reel, transmitted through the reel, and exited from the side end A, and a second detector for detecting radiation exited from the side end A.

Furthermore, there is provided the radiation transmission inspection device further comprising: an adjustment portion for adjusting a position of the radiation source and the detector of the first measurement portion and a position of the radiation source and the detector of the second measurement portion; and a control portion for adjusting positions such that a distance (FOD) between the first radiation source and the side end A and a distance (FOD) between the second radiation source and the side end B become equal, and a distance (FID) between the first radiation source and the detector and a distance (FID) between the second radiation source and the detector become equal. Furthermore, there is provided the radiation transmission inspection device further comprising a movement portion for moving the first measurement portion and the second measurement portion in a radial direction of the film reel.

The present invention is a method for manufacturing a microporous film, the method comprising: a process of kneading a polyolefin resin and a plasticizer to prepare a polyolefin solution; a process of discharging the polyolefin solution from a die and cooling the polyolefin solution to obtain a gel-like sheet; a process of stretching the gel-like sheet to form a stretched sheet; a process of removing the plasticizer from the stretched sheet to obtain a microporous film; a process of winding the microporous film on a core to obtain a film reel; and a process of inspecting a foreign body contained in the film reel by a radiation transmission inspection method of the present invention. That is, it is a method for manufacturing a film reel, the method comprising obtaining a film reel by winding a long film on a core; and then a foreign body detection process of inspecting a foreign body contained in the film reel by the aforementioned radiation transmission inspection method.

EFFECTS OF THE INVENTION

In the present invention, since a film product reel is irradiated with radiation from a side end on the other side toward each of both side ends, it is sufficient if each irradiation can detect a foreign body in a region from an intermediate position in the thickness direction of the film product reel to the side end on the irradiation side. This means that the thickness of the film product reel, which is the inspection object, has been substantially reduced by half in terms of radiation transmission inspection. Thus, the sensitivity variation is reduced and the size of the image formed on the detector is also enlarged. As a result, the foreign body can be reliably detected.

BRIEF DESCRIPTION OF THE DRAWINGS

Fig. 1 is a diagram for explaining a basic principle of radiation transmission inspection.
Fig. 2(a) is a diagram for explaining sensitivity variation based on the position of a foreign body in a thickness direction.
Fig. 2(b) is a diagram for explaining sensitivity variation based on the position of a foreign body in a thickness direction.
Fig. 2(c) is a diagram for explaining sensitivity variation based on the position of a foreign body in a thickness direction.
Fig. 3(a) is a diagram for explaining a principle of a conventional radiation transmission inspection method.
Fig. 3(b) is a diagram for explaining a principle of a radiation transmission inspection method based on the present invention.
Fig. 4 is a diagram for explaining processing for obtaining a position and a size of a foreign body in a thickness direction.
Fig. 5 is a graph for explaining conditions under which the same foreign body can be detected by irradiating each of both side ends with X-rays.
Fig. 6 (a) is a diagram for explaining that a foreign body is detected by dividing a region between a side end and an intermediate position in the thickness direction into a plurality of regions in the thickness direction.
Fig. 6 (b) is a diagram for explaining that a foreign body is detected by dividing a region between a side end and an intermediate position in the thickness direction into a plurality of regions in the thickness direction.
Fig. 7(a) is a plan view showing a first embodiment of a radiation transmission inspection device.
Fig. 7(b) is a front view showing a first embodiment of a radiation transmission inspection device.
Fig. 8 is a front view showing a second embodiment of a radiation transmission inspection device.
Fig. 9 is a side view showing a third embodiment of a radiation transmission inspection device.
Fig. 10 is a front view showing a fourth embodiment of a radiation transmission inspection device.

EMBODIMENTS OF THE INVENTION

First, terms related to radiation transmission inspection using X-rays are shown below.

Optical axis of X-ray source:The central axis of X-ray irradiation. X-rays are emitted so as to spread in a conical shape or a pyramidal shape about the optical axis.

Field of view: The range that can be irradiated with X-rays . Expressed in area. The closer to the radiation source, the narrower the field of view.

Irradiation range: The range that is irradiated with X-rays . This is the range where X-rays spread in a conical shape or a pyramidal shape about the optical axis hit.

Scanning: To move a set of a radiation source and a detector along the inspection object in an axial direction or the like.

FID: The separation distance between the radiation source and the detector.

FOD: The separation distance between the radiation source and the shortest side end of the film reel from the radiation source.

Detection sensitivity: Detectable size of the inspection object. Expressed by the minimum size.

Sensitivity variation: Difference in the size of the detectable inspection object depending on the position of the inspection object in the thickness direction.

Foreign body detection process: It represents one processing step of a foreign body inspection process of irradiating an object with radiation from a radiation source and detecting radiation that has passed through the object. When there are a plurality of processing steps, they are called first, second, third,....

(Radiation transmission inspection method)

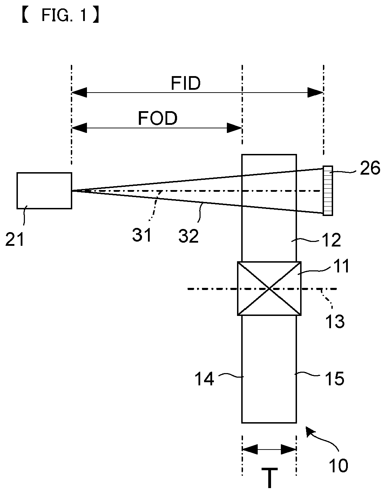

Next, a preferred embodiment of the present invention will be described with reference to the drawings. Fig. 1 shows a basic principle of a general radiation transmission inspection using a film reel 10 as an inspection object. In this drawing, the film reel 10 is shown as a cross-section in a plane including a central axis 13 in a length direction of a cylindrical core 11, and hatching is partially omitted. The film reel 10 is configured by winding a long film around the outer peripheral surface of the core 11 a plurality of times around the central axis 13 of the core 11 as a rotation axis. Reference numeral 12 denotes a layer of a film wound on the outer peripheral surface of the core 11. The surface of the film reel 10 facing the direction in which the central axis 13 of the core 11 extends is referred to as a side end of the film reel 10. The side ends are circular surfaces corresponding to both ends of the cylindrical film reel, and are located on the side surfaces of the film reel. Therefore, a side surface on one side is referred to as a side end A (reference numeral 14 in Fig. 1), and a side surface on the other side is referred to as a side end B (reference numeral 15 in Fig. 1). The dimension between both side ends in the length direction of the core 11 (that is, the distance between the side end A and the side end B) substantially matches the width dimension of the film wound around the core 11. The side end of the film reel 10 is also a surface where the side end in the width direction of the film wound around the core 11 is exposed. In the drawing, T indicates the thickness of the film reel 10, which is equal to the width of the film wound around the core 11. The direction parallel to the direction in which the central axis 13 of the core 11 extends is referred to as the thickness direction of the film reel 10.

In order to detect whether or not a foreign body such as a small metal piece is mixed in the film reel 10, a radiation source 21 such as an X-ray source is arranged at a position facing one side end of the film reel 10. In the following, it is assumed that X-rays are emitted from the radiation source 21, but other radiation such as γ-rays may be used instead of X-rays. The radiation source 21 can be generally considered as a point light source. From the radiation source 21, X-rays are emitted to spread out in a conical shape or a pyramidal shape along the optical axis 31 such that the optical axis 31 is perpendicular to one side end of the film reel 10. In the drawing, reference numeral 32 indicates a range (irradiation range) in which the X-ray spreads. Then, in order to detect X-rays transmitted through the film reel 10, the detector 26 including a two-dimensional X-ray detector such as an imaging plate is arranged at a position facing the other side end of the film reel 10 such that the center position of the detector 26 is positioned on an extension of the optical axis 31.

If there is a foreign body such as metal in the film reel 10, the X-ray is blocked by the foreign body. Therefore, the X-ray intensity at the position corresponding to the foreign body in the detector 26 is reduced. By detecting, as an image, the position where the X-ray intensity is reduced, the foreign body in the film reel 10 can be detected including the position in the film reel 10. The position here is, when the film reel is viewed from the side end face, a two-dimensional coordinate on a circular plane projected in that direction.

In accordance with the general terminology of radiation transmission inspection techniques, the separation distance between the radiation source 21 and the detector 26 is called FID (Focus to Image Distance). Moreover, the separation distance between the radiation source 21 and the side end of the film reel 10, which is an inspection object, on the radiation source 21 side is called an FOD (Focus to Object Distance) . The FOD is originally the separation distance between the radiation source 21 and the foreign body, which is a detection target. However, the position of the foreign body is unknown at a stage before execution of the radiation transmission inspection. Therefore, in the present invention, the separation distance between the radiation source 21 and the side end of the film reel 10 on the radiation source 21 side is defined as the FOD.

(Regarding detection sensitivity and sensitivity variation)

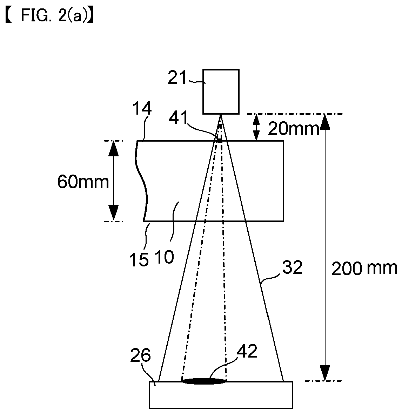

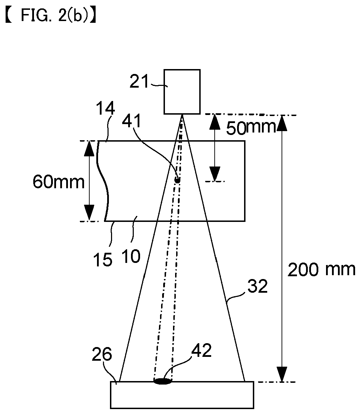

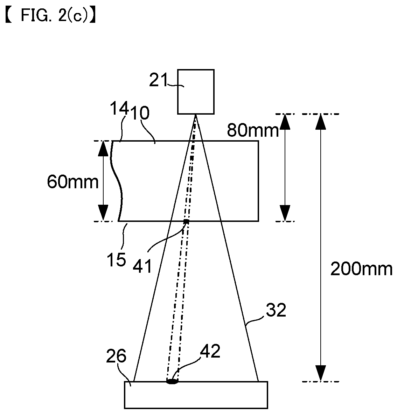

Next, the detection sensitivity and sensitivity variation of a foreign body will be described with reference to Fig. 2. Here, specific numerical values are used for the sake of easy understanding, but the present invention is not limited to such specific dimensions. It is assumed that the FID is 200 mm, the FOD is 20 mm, and the thickness T of the film reel 10 is 60 mm.

In Fig. 2, X-rays are emitted along the thickness direction of the film reel 10 from the radiation source 21 present above in the drawing to the detector 26 present below in the drawing. In order to reliably detect a small foreign body 41, it is necessary to make the foreign body image 42 on the detector 26 as large as possible. The projection magnification is increased such that the distance from the radiation source 21 to the foreign body 41 is smaller than the FID. The projection magnification is equivalent to a value obtained by dividing the size of the foreign body image 42 by the actual size of the foreign body 41, and the projection magnification is a value obtained by dividing FID by FOD (FID/FOD).

Fig. 2(a) shows a case where the foreign body 41 exists at the side end A (reference numeral 14 in Fig. 2) of the film reel 10 on the radiation source 21 side. At this time, the separation distance between the radiation source 21 and the foreign body 41 is 20 mm, and the projection magnification is 10 (= 200 ÷ 20). Therefore, assuming that the size of the foreign body 41 is 100 $\mu$m, the size (projection size) of the foreign body image 42 on the detector 26 is 1000 $\mu$m. Conversely, the size of the foreign body, which is the lower limit of the detection sensitivity, is determined by the size of the detectable image 42 as described below. When the size of the image 42 that can be detected by the detector 26 is 400 $\mu$m or more, the lower limit of the size of the detectable foreign body 41, that is, the detection sensitivity, the size of the foreign body, is 40 $\mu$m. Similarly, Fig. 2(b) shows a case where the foreign body 41 exists at the center of the film reel 10 in the thickness direction. At this time, the separation distance between the radiation source 21 and the foreign body 41 is 50 mm. Fig. 2(c) shows a case where the foreign body 41 exists at the side end B (reference numeral 15 in Fig. 2) of the film reel 10 on the detector 26 side. At this time, the separation distance between the radiation source 21 and the foreign body 41 is 80 mm. In the cases of (b) and (c), similar to the case of (a), the projection magnification, the projection size at the detector 26 when the size of the foreign body 41 is 100 $\mu$m, and the size of the foreign body 41 at the time when the size of image 42 is 400 $\mu$m, that is, the detection sensitivity (lower limit) can be obtained. Table 1 shows projection magnification, projection size, and detection sensitivity (lower limit).

[Table 1]

|  | (a) | (b) | (c) |
|---|---|---|---|
| Foreign matter location | Side end on radiation source side | Center in thickness direction | Side end on detector side |
| Separation distance (FID) between radiation source 21 and detector 26 | 200 mm | 200 mm | 200 mm |
| Separation distance (FOD) between radiation source 21 and foreign matter to be detected | 20 mm | 50 mm | 80 mm |
| Projection magnification | 10 | 4 | 2.5 |
| Projection size of 100 $\mu$m foreign matter | 1000 $\mu$m | 400 $\mu$m | 250 $\mu$m |
| Detection sensitivity (lower limit) | 40 $\mu$m | 100 $\mu$m | 160 $\mu$m |

As shown in Table 1, when the thickness T of the film reel 10 is 60 mm, the sensitivity variation is as large as 40 to 160 $\mu$m. Further, for example, in the case of (c), since the detection sensitivity is 160 $\mu$m, a foreign body having a size of 100 $\mu$m cannot be detected. Further, the projection size of the foreign body mixed in the film reel is obtained by multiplying the size of the foreign body by the projection magnification. That is, since the position of the foreign body is unknown from the projection size, the size of the foreign body cannot be specified.

As described above, the size of the foreign body that can be detected is determined by the position of the foreign body in the thickness direction, that is, where the foreign body exists at what ratio with respect to the radiation source and the detector. Since the projection magnification is FID/FOD, the image size at the detector is proportional to the FID and inversely proportional to the FOD. Therefore, the detection sensitivity for a foreign body of the same size is inversely proportional to the FOD. By increasing the FOD and increasing the ratio of the distance from the radiation source to the inspection object to the distance from the radiation source to the detector, the difference in the size of the inspection object that can be detected depending on the position in the thickness direction, that is, sensitivity variation is reduced.

Specifically, the distance of the FID is set to 1, the position of the radiation source is set to 0, the position of the detector is set to 1, and the sensitivity variation in the case where the ratio of the thickness of the film reel, which is an inspection target, to the distance of the FID is 0.3 (the measurement range is 0.3 width) is described below.

When the distance (FOD) from the radiation source to the side end face A is 0.2
The thickness range of the film reel is 0.2 to 0.5
In the case of 0.2, 1/0.2 = 5
In the case of 0.5, 1/0.5 = 2
Therefore, the sensitivity variation is 5/2 = 2. 5 (times)
When the distance (FOD) from the radiation source to the side end face A is 0.5
The thickness range of the film reel is 0.5 to 0.8
In the case of 0.5, 1/0.5 = 2
In the case of 0.8, 1/0.8 = 1.25
Therefore, the sensitivity variation is 2/1.25 = 1.6 (times).

On the other hand, the detection sensitivity (detecting a small foreign body) is to increase the FID or reduce the FOD. That is, the detection sensitivity and the sensitivity variation have opposite characteristics, and the sensitivity variation increases to detect a small foreign body. When the foreign body in the film reel is detected by transmitting the radiation from one of the side end faces, the small foreign body in the film reel may not be detected in some places. Moreover, it is difficult to specify the actual size of the foreign body from the detection result without knowing where in the thickness direction it exists.

(Method for inspecting radiation transmission from the front and back of film reel when FOD is large)

In order to be able to detect a foreign body 41 having a size of 100 μm at the side end of the film reel 10 on the detector 26 side in the conventional art, if the FOD is left as it is, the FID needs to be longer than the above conditions. This results in a reduction in the X-ray intensity on the detector 26 side, and it is necessary to increase the cumulative X-ray irradiation time, which increases the measurement time.

Furthermore, when the FID becomes longer, the spread of radiation becomes larger than the area of the detector 26, and the spread of X-rays incident on the detector 26 becomes narrower. The measurement range in which foreign body detection can be performed by one X-ray shot is also narrowed, so that the number of X-ray shots for inspecting the entire film reel 10 is increased, and the measurement time is further increased. On the other hand, in order to be able to detect the foreign body 41 having a size of 100 μm attached on the detector 26 side, when the FID is set to the above-described conditions, the FOD is cannot be set to zero or less, and the film reel 10 having a large thickness T cannot be measured.

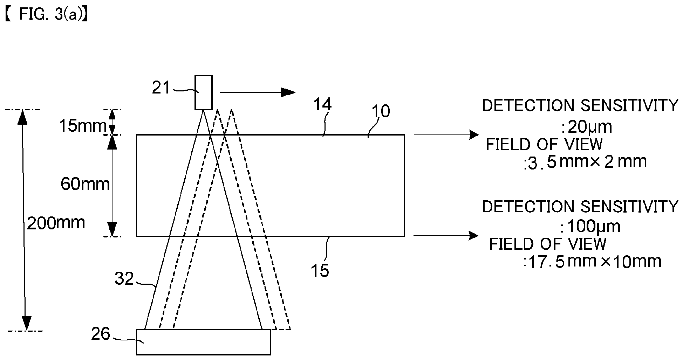

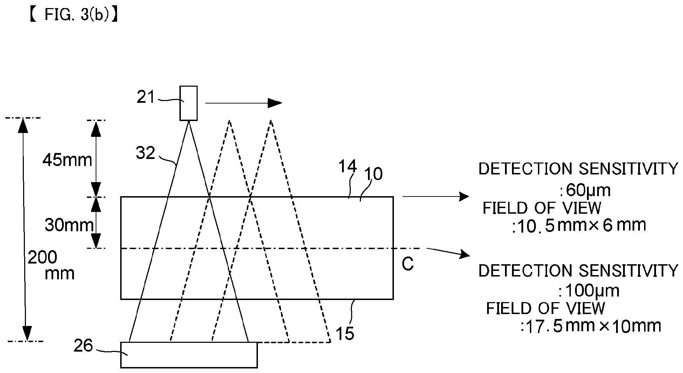

Fig. 3 is a diagram for explaining the principle of the radiation transmission inspection method according to the present invention. Fig. 3 (a) shows an inspection according to the conventional method, and Fig. 3(b) shows an inspection based on the present invention. Using the film reel 10 having the same thickness T of 60 mm as that shown in Fig. 2 as an inspection object, a foreign body having a size of 100 μm or more is detected. As is clear from the description using Fig. 2, it is more difficult to detect a foreign body on the detector 26 side. Therefore, according to the conventional method shown in Fig. 3(a), in order to enable detection of a foreign body having a size of 100 μm present in the side end on the detector 26 side (that is, the detection sensitivity at the side end on the detector 26 side is set to 100 μm), the FOD is set to 15 mm. At this time, the foreign body 41 can be detected with a detection sensitivity of 20 μm at the side end of the film reel 10 on the radiation source 21 side. That is, in this example, the detection sensitivity varies between 20 μm and 100 μm, and the sensitivity variation is large.

Moreover, considering the spread of X-rays, in one shot inspection, for example, at the side end on the radiation source 21 side, the foreign body 41 can be detected in a region with a field of view of 3.5 mm × 2 mm, and at the side end on the detector 26 side, the foreign body 41 can be detected in a region with a field of view of 17.5 mm × 10 mm. In order to inspect the foreign body 41 over the entire film reel 10, the film reel 10 needs to be completely scanned to be irradiated with X-rays as shown by the broken lines in the drawing on the basis of the minimum field of view (X-ray field of view at the side end on the radiation source 21 side).

On the other hand, in the method based on the present invention shown in Fig. 3 (b), in one X-ray shot, a foreign body 41 having a size of 100 μm or more in the region from the side end A of the film reel 10 on the radiation source 21 side to an intermediate position C (dashed line) of the film reel 10 in the thickness direction is detected. Then, although not shown, the region from the intermediate position C is irradiated with radiation from the other face to perform detection. Assuming that the radiation source 21, the detector 26, the FID, etc. are the same as in Fig. 3 (a), it is only necessary to detect a foreign body 41 having a size of 100 $\mu$m at the intermediate position C of the film reel 10 in the thickness direction, the FOD can be 45 mm.

At this time, the detection sensitivity at the side end A on the radiation source 21 side is 60 $\mu$m, and the field of view is 10.5 mm $\times$ 6 mm. The detection sensitivity at the intermediate position C in the thickness direction is 100 $\mu$m, and the field of view is 17.5 $\times$ 10 mm. The detection sensitivity varies between 60 $\mu$m and 100 $\mu$m, but the variation is much smaller than in the case of Fig. 3 (a). At this time, the minimum field of view is 10.5 $\times$ 6 mm, which is nine times in area ratio as compared with the conventional case shown in Fig. 3(a). Therefore, the method of the present invention can perform inspection nine times faster than the conventional method.

In the method shown in Fig. 3(b), the detection sensitivity is lower than 100 $\mu$m in a region between the intermediate position C of the film reel 10 in the thickness direction and the side end B on the detector 26 side. Therefore, in order to reliably detect the foreign body 41 having a size of 100 $\mu$m or more, in the present invention, the film reel 10 is turned over relative to a measurement portion including the radiation source 21 and the detector 26, that is, a first inspection process portion such that the region that could not be inspected faces the radiation source 21 side, and the radiation transmission inspection is performed again (second inspection process). After all, in the method of the present invention, a first foreign body detection process of irradiating the film reel 10 with radiation from the side end A, which is one side thereof, and a second foreign body detection process of irradiating the film reel 10 with radiation from the side end B, which is the other side are performed.

Regarding the time required for the measurement, in the present invention, the area of the minimum field of view is nine times as large as that in the case of Fig. 3(a) in which all the foreign bodys 41 are detected in a single foreign body detection process. Therefore, the number of X-ray shots can be reduced to about 1/5 (2/9) even in consideration of performing the foreign body detection process twice. That is, in the present invention, foreign bodys can be detected in a shorter time as compared with the method based on a conventionally known technique. Two sets of measurement portions including the radiation source 21 and the detector 26 are prepared so as not to interfere with each other. When one of the measurement portions emits radiation from the side end A, which is one side, of the film reel 10 and the other of the measurement portions emits radiation from the side end B, which is the other side, the first foreign body detection process and the second foreign body detection process can be proceeded simultaneously. Thus, the time required to inspect the entire surface of the film reel 10 can be further reduced. Further, in the method shown in Fig. 3(b), the sensitivity variation is reduced as compared with the method of Fig. 3(a). Therefore, the film reel 10 having a large thickness can be inspected accordingly. Further, the film reel 10 can be largely separated from the radiation source 21. Therefore, the types of film reel 10 for which inspection can be executed also are increased.

(Regarding the position and size of a foreign body by radiation transmission inspection from the front and back)

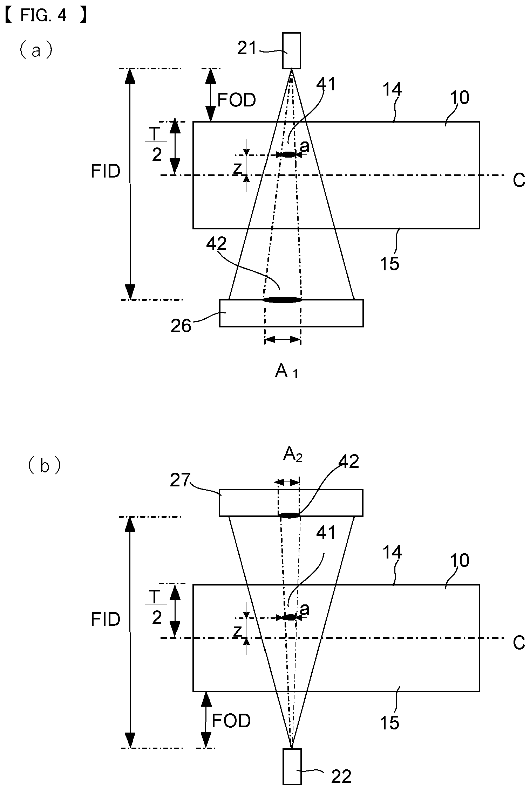

By the way, in the case of the radiation transmission inspection method based on the present invention described with reference to Fig. 3 (b), when the film reel 10 is irradiated with radiation from the side end A, which is one side, and when the film reel 10 is irradiated with radiation from the side end B, which is the other side, the same foreign body 41 is detected in some cases. In that case, the position and size of the foreign body 41 in the thickness direction can be determined. Fig. 4 is a diagram for explaining processing for determining the position and size of the foreign body 41 in the thickness direction in such a case.

In the film reel 10 shown in Fig. 4(a), one side surface is a side end A (reference numeral 14), and the other side surface is a side end B (reference numeral 15) . Then, the first detector 26 detects the radiation emitted from the first radiation source 21, incident from the side end A of the film reel 10, transmitted through the reel, and exited from the side end B, to obtain information regarding the foreign body 41. The foreign body 41 projects an image 42 on the detector 26, and the position of the image 42 is recorded as specific position information of the detector 26. For example, the position of the foreign body is mapped on an XY coordinate. Then, the distance between the first radiation source 21 and the first detector 26 or the side ends A, that is, the FID and the FOD are fixed, the inside of the side surface of the film reel is scanned, and the coordinate information of the foreign body 41 across the entire film reel is obtained.

In the scanning method, the first radiation source 21 and the first detector 26 may be moved in two axes of XY, or the film reel may be rotated while moving in the radial direction of the film reel. The scanning may be performed stepwise, and after emission of a predetermined amount of radiation required for the inspection, they may be moved a predetermined distance so that the irradiation areas do not overlap. Alternatively, recording may be performed as the position of the side surface of the film reel while continuously movement is performed at a very low speed. If the irradiation area per one time is small, the number of times of irradiation increases. By performing such scanning, the position of the foreign body on the side surface of the film reel and a size A1 of the image 42 can be obtained. Note that regarding the size of the image 42, because the radiation is reduced because the radiation is blocked by a metallic foreign body or the like, it is preferable to use a method of counting the number of pixels.

In Fig. 4(b), the inspection of the film reel 10 is performed from the surface (back surface) on the opposite side to Fig. 4(a). Here, the second detector 27 detects the radiation emitted from the second radiation source 22, incident from the side end B of the film reel, transmitted through the reel, and exited from the side end A, to obtain information regarding the foreign body. The foreign body 41 projects an image 42 on the detector 27, and the position of the image 42 is recorded as specific position information of the detector 27. For example, the position of the foreign body is mapped on an XY coordinate. Then, similar to the first radiation source 21 and the first detector 27, the FID and the FOD are fixed, and the inside of the side surface of the film reel is scanned, and the coordinate information of the foreign body 41 across the entire film reel is obtained. Further, a size A2 of the image 42 is obtained.

Since the foreign bodys 41 are the same in Figs. 4 (a) and 4(b), the position information (for example, XY coordinate) of the inside of the side surface of the film reel is the same. However, the sizes A1 and A2 of the image 42 in the first detector 26 and the second detector 27 differ from each other due to the distance relationship between the radiation sources 21 and 22.

Here, the ratio between the FID and the FOD and the detection sensitivity (the minimum detectable size) will be described while the first foreign body detection process and the second foreign body detection process are compared. The first foreign body detection process includes the first radiation source 21 and the first detector 26, and performs inspection by transmitting radiation from the side end A to the side end B of the film reel. The second foreign body detection process includes the second radiation source 22 and the second detector 27, and performs inspection by transmitting radiation from the side end B to the side end A of the film reel.

The distance of the FID in the first foreign body detection process and the distance of the FID in the second foreign body detection process are adjusted to be equal. Then, the distance of the FOD in the first foreign body detection process and the distance of the FOD in the second foreign body detection process are adjusted to be equal. However, in the first foreign body detection process, it is the distance between the radiation source 21 and the side end A, and in the second foreign body detection process, it is the distance between the radiation source 22 and the side end B. As described above, in one example of Figs. 4 (a) and 4(b), the FID is 200 mm and the FOD is 45 mm.

The detection sensitivities and the sensitivity variations in the first foreign body detection process and the second foreign body detection process are as described above.

(Detection sensitivity) At a distance in the thickness direction between the side end A in the first foreign body detection process and the side end B in the second foreign body detection process, a foreign body of about 90 $\mu$m or more can be detected, at a center position of the film reel (thickness T is 60 mm), about 150 $\mu$m or more can be detected, and further at a distance in the thickness direction between the side end B in the first foreign body detection process and the side end B in the second foreign body detection process, about 210 $\mu$m or more can be detected.

Then, regarding the size of the image 42 projected on each detector, a foreign body of 100 $\mu$m square is 444 $\mu$m square, about 4.44 times at a distance in the thickness direction between the side end A in the first foreign body detection process and the side end B in the second foreign body detection process, 267 $\mu$m square, about 2.67 times at a center position of the film reel (thickness T is 60 mm), and further 211 $\mu$m square, about 2.11 times at a distance between the side end B in the first foreign body detection process and the side end B in the second foreign body detection process.

It is assumed that a foreign body 41 whose actual dimension is a exists in the film reel 10, and a distance from the intermediate position C in the thickness direction of the film reel 10 to the foreign body 41 is z. The thickness of the film reel 10 is T as described above. The sizes of the images 42 on the detector 26 due to the foreign body 41 when the film reel 10 is irradiated with X-rays from one side end side and irradiated with X-rays from the other side end side are respectively $A_1$ and $A_2$. Since generality is not lost even if $A_1 \geq A_2$ is assumed, $A_1 \geq A_2$ is set. Then, the foreign body 41 is present at a position separated by z in the direction of the radiation source 21 when the size of the image is $A_1$ when viewed from the intermediate position C in the thickness direction of the film reel. The projection magnification $A_1$/a in the case where the size of the image 42 is $A_1$ as shown in Fig. 4(a) and the projection magnification $A_2$/a in the case where the size of the image 42 is $A_2$ as shown in Fig. 4(b) are represented by Formulae (1) and (2), respectively.

$$A_1/a = FID/(FOD + T/2-z) \quad (2)$$

$$A_2/a = FID/(FOD + T/2 + z) \quad (3)$$

From Formulae (2) and (3), the actual dimension a of the foreign body 41 and the distance z from the intermediate position C can be determined as shown in Formulae (4) and (5).

$$z = (A_1 - A_2)/(A_1 + A_2) \times (FOD + T/2) \quad (4)$$

$$a = 2 \times A_1 \times A_2/(A_1 + A_2) \times (FOD + T/2)/FID \quad (5)$$

As described above, by obtaining the foreign body information by using the first foreign body detection process and the second foreign body detection process in which radiation is incident from both sides of the film reel, the distance in the thickness direction of the film reel 10 and the actual size of the foreign body can be obtained. Because the actual size of the foreign body can be determined regardless of the distance in the thickness direction, that is, the presence position in the film width direction in the film reel by determination of the foreign body mixed in the film reel, it is possible to determine, for example, whether or not the size exceeds the size of the foreign body that becomes a problem, and the inspection accuracy can be improved.

Thus, when the radiation is incident from both sides of the film reel and the inspection including the first foreign body detection process and the second foreign body detection process is performed, the distance from the radiation source on both sides of the film reel to the inspection object is preferably set to conditions that a foreign body existing at least up to half the thickness (T) of the film reel can be easily detected. That is, the maximum distance from the radiation source to the foreign body is FOD + 1/2T (where T represents the thickness of the film reel). Since the detection sensitivity increases as the distance from the radiation source decreases, the value obtained by dividing FOD + 1/2T by FID is preferably 0.5 or less. On the other hand, since the sensitivity variation increases as the distance from the radiation source decreases, the FOD is preferably 20 mm or more. Depending on the thickness (T) of the film reel, the value obtained by dividing FOD + 1/2T by FID is preferably 0.25 or more when T = 60 mm, and preferably 0.2 or more when T = 40 mm. That is, a condition satisfying the above-described Formula (1) is a preferable aspect.

$$0.2 \leq (T + 2FOD)/2FID \leq 0.5 \cdots (1)$$

In addition, regarding the inspection time, the measurement time is doubled because the measurement is performed twice from the front and back of the film reel. When the measurement area per time is doubled or more, the total time required for inspection is reduced. The measurement area is proportional to the square of the distance. In a preferred aspect, the ratio of the measurement area corresponding to the distance of FOD + 1/2T to the measurement area corresponding to the distance of FOD, that is, the ratio of (FOD + 1/2T)/FOD exceeds $\sqrt{2}$.

When the foreign body 41 can be detected only from one side end of the film reel 10, it is sufficient if an assumption is made regarding the actual dimension of the foreign body 41 on the basis of the measured size of the image 42. The radiation transmission inspection method according to the present invention is used, for example, to remove the film reel 10 as a defective product when the foreign body 41 having a predetermined size or more is mixed in the film reel 10. Therefore, the significance of performing radiation transmission inspection will not be lost even when such an assumption is made regarding the actual dimension.

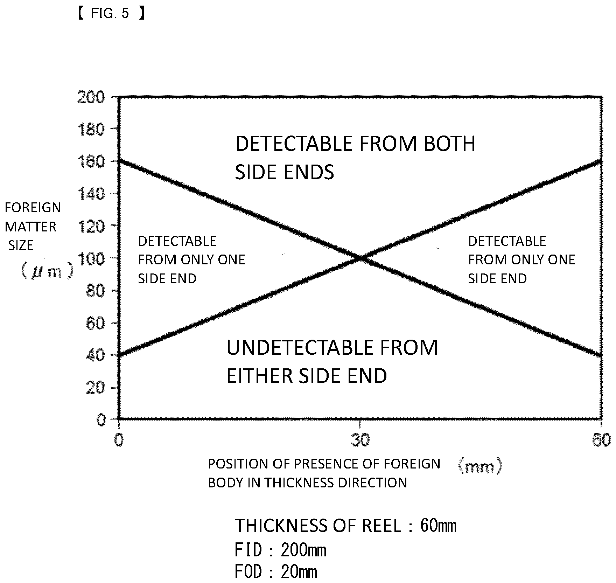

Fig. 5 is a characteristic diagram showing, in the thickness direction of the film reel, the presence/absence of foreign body detection in the first foreign body detection process and the second foreign body detection process. Using a configuration shown in Fig. 2(b) (FID = 200 mm, FOD = 20 mm), when inspecting the film reel 10 having a thickness of 60 mm, depending on the position of the foreign body 41 in the thickness direction and the actual dimension, it is indicated whether the foreign body 41 can be detected by X-ray irradiation from either side of both side ends (described as "detectable from both side ends' '), it can be detected only by X-ray irradiation from one side end (described as "detectable from only one side end"), or it cannot be detected by X-ray irradiation from either side end ("undetectable from either side end").

As described above, by the detection in the first foreign body detection process and the second foreign body detection process, the radiation source and the detector are scanned on the side surface of the film reel, and an obtained foreign body defect map is overwritten, and a smaller foreign body can be detected. Further, it is possible to reduce the time required for calculating the size and the position of the foreign body. Note that when a plurality of foreign bodys 41 exists along the optical axis of the X-ray in the film reel 10, the images of these foreign bodys 41 can be overlapped and detected as if there is only one foreign body. Such overlapping of the images can be resolved by slightly moving the X-ray irradiation position, for example, at a smaller interval than half of the minimum field of view described above, and the plurality of foreign bodys 41 can be detected independently. However, in the case where a radiation transmission inspection is performed to determine a defective product by detecting a foreign body, it is not necessary to resolve the image 42 of such a foreign body. In addition, in order to separate the images, regarding the incident angle of each radiation on the optical axis and the side surface of the film reel, the optical axis may be obliquely, not perpendicularly, incident on the film reel to separate and detect the foreign bodys.

In the radiation transmission inspection method according to the present invention described above, the required number of times of X-ray shot is determined according to the minimum visual angle defined at the side end of the film reel 10 on the radiation source 21 side, and the inspection time is determined. Since the minimum visual angle can be increased by reducing the thickness of the inspection target, the required number of times of X-ray shot is inversely proportional to the area based on the minimum visual angle. Therefore, in order to further reduce the inspection time, the range between the intermediate position C on the film reel 10 and the side end on the radiation source 21 side is divided into a plurality of regions in the thickness direction, and the inspection of the foreign body 41 is performed for each region. That is, it is conceivable to perform a plurality of times of detection scanning with different FODs. Since the X-ray irradiation is performed in the same direction, the detection of the foreign body 41 can be overlapped. In such a case, it is sufficient to determine the detection of one foreign body 41 as a defective product.

(Regarding the case where the thickness of the film reel is large)

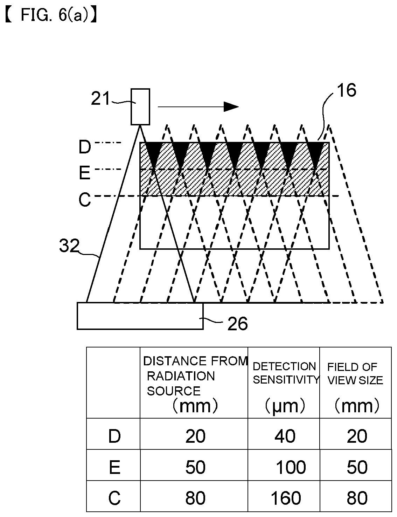

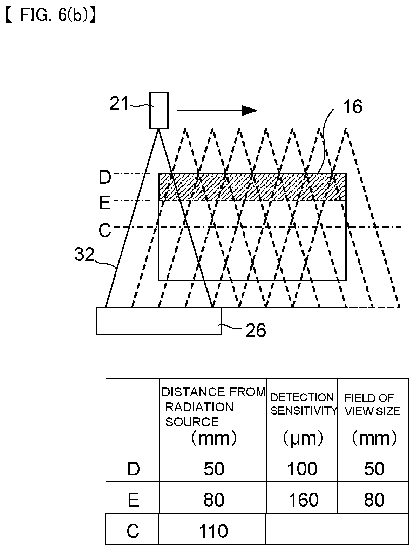

The greater the thickness of the film reel, the more difficult it is to inspect a foreign body mixed in the film reel. Fig. 6 is a diagram for explaining that a film reel 10 having a thickness T of, for example, 120 mm is further divided to two regions in the thickness direction from the intermediate position C in the thickness direction of the film reel 10 to a side end D on the radiation source 21 side, and the inspection of the foreign body 41 is performed for each region. That is, this is a method in which the inspection is performed by dividing the film reel into four parts in the thickness direction. This is to increase the ratio of the distance from the radiation source to the inspection object to the distance from the radiation source to the detector, thereby reducing the sensitivity variation and obtaining the detection sensitivity for detecting a required (here, 100 $\mu$m size) foreign body.

Here, as the number of divisions in the thickness direction of the film reel, a case where the region from one side end D (reference numeral 16) of the film reel 10 to the intermediate position C is divided into two will be described. The region from the other side end of the film reel 10 to the intermediate position C can also be divided into two and detection of the foreign body 41 can be performed similarly. In practice, it is preferable that the film reel 10 be divided into two regions in the thickness direction on one side end side and the other side end side so that the film reel 10 is divided into four regions in the thickness direction in total and inspection of the foreign body 41 is performed for each. By applying the concept described here, it is also possible to divide the region from any side end of the film reel 10 and to intermediate position C into three or more regions and inspect the foreign body 41 for each region.

In Fig. 6, the position of the side end of the film reel 10 on the radiation source 21 side is indicated at D, and the position, which is a middle point, between the side end D (reference numeral 16) and the intermediate position C in the thickness direction of the film reel 10 is indicated at E. Assuming that the thickness T of the film reel 10 is 120 mm, the distance between the side end D and the position E is 30 mm, and the distance between the position E and the intermediate position C is also 30 mm. Fig. 6(a) shows an arrangement of the radiation source 21 and the detector 26 for detecting a foreign body 41 having a size of, for example, 160 $\mu$m or more in the region between the position E and the intermediate position C. The separation distance FID between the radiation source 21 and the detector 26 is 200 mm, and the separation distance FOD between the radiation source 21 and the side end D on the radiation source 21 side is 20 mm. Then, as shown in a table form in Fig. 6(a), the detection sensitivity at the intermediate position C is 160 $\mu$m, and the field of view size at the position E is 50 mm. If the X-ray irradiation range is a square, the minimum field of view when detecting the foreign body 41 between the position E and the intermediate position C is 50 mm $\times$ 50 mm. In Fig. 6(a), an obliquely hatched region is a region where a foreign body having a size of 160 $\mu$m can be detected by scanning using a minimum range of 50 mm $\times$ 50 mm (a region having a detection sensitivity of less than 160 $\mu$m). As shown in Fig. 6, a foreign body 41 having a size of 160 $\mu$m can also be detected in a part of the region between the side end D and the position E. In the region between the side end D and the position E, the portion shown in black is an uninspected region not irradiated with X-rays.

Fig. 6(b) shows an arrangement for detecting a foreign body 41 having a size of 160 $\mu$m or more in a region between the side end D on the radiation source 21 side and the position E. The separation distance FID between the radiation source 21 and the detector 26 is 200 mm as in the case of Fig. 6(a), and the separation distance FOD between the radiation source 21 and the side end D of the radiation source 21 side is 50 mm. That is, compared to the case of Fig. 6(a), the FID is the same, but the FOD is increased by 30 mm. At this time, the detection sensitivity at the position E is 160 $\mu$m, the field of view size at the position D is 50 mm, and assuming a square irradiation field, the minimum field of view when detecting the foreign body 41 between the side end D and the position E is 50 mm x 50 mm. In Fig. 6(b), an obliquely hatched region is a region where a foreign body 41 having a size of 160 $\mu$m can be detected by scanning using a minimum field of view of 50 mm $\times$ 50 mm (a region having a detection sensitivity of less than 160 $\mu$m).

In the method described with reference to Fig. 6, scanning using a field of view of 50 mm $\times$ 50 mm is performed twice. On the other hand, in order to detect a foreign body 41 having a size of 160 $\mu$m or more between the side end D and the intermediate position C in one inspection using the device configuration shown here, similar to the case of Fig.

6(a), the FOD needs to be 20 mm. At this time, since the field of view size at the side end D is 20 mm, it is necessary to perform scanning once using a field of view of 20 mm × 20 mm. The area of the field of view of 50 mm × 50 mm is 2500 mm², which is six times or wider than 400 mm² which is the area of the field of view of 20 mm × 20 mm. Therefore, the method described with reference to Fig. 6, even if the scanning is performed twice, can reduce the overall measurement time as compared with the case where a foreign body between the side end D and the intermediate position C is detected by one scanning.

Further, in Figs. 6 (a) and 6(b), the description has been given from the side end D (reference numeral 16) to the intermediate position C of the film reel, but it is preferable to similarly perform inspection from the other side end to the intermediate position C of the film reel. At this time, it is preferable to include a third foreign body detection process and a fourth foreign body detection process in addition to the first foreign body detection process and the second foreign body detection process. The third foreign body detection process is configured to include a third radiation source 23 and a third detector 28, and the fourth foreign body detection process is configured to include a fourth radiation source 24 and a third detector 29. Then, the FID and FOD of the third foreign body detection process and the fourth foreign body detection process are adjusted to be different values from those of the first and second foreign body detection processes, and that the FID and FOD have the same value. An inspection method is provided that covers the entire film reel in the thickness direction using two sets of foreign body detection processes from both sides of the film reel.

(Foreign body)

Examples of the material of the foreign body that can be detected by using the present invention include metals (Cu, SUS, Fe, and the like) and an oxide thereof, silica, and the like. When there is a significant difference (= if the S/N ratio is high) in the X-ray intensity transmitted through a portion where a foreign body is present as compared with the X-ray intensity transmitted through a portion where a foreign body is absent (including a variation), detection is possible in addition to the above. In general, as the specific gravity of a foreign body increases, the X-ray intensity after transmission decreases, and the S/N ratio increases, which tends to facilitate detection. Further, as the thickness T is larger, the X-ray intensity variation after transmission through the film is integrated and becomes larger. Therefore, even for the same foreign body, the S/N ratio tends to be small and the foreign body tends to be difficult to detect.

(First embodiment of radiation transmission inspection device)

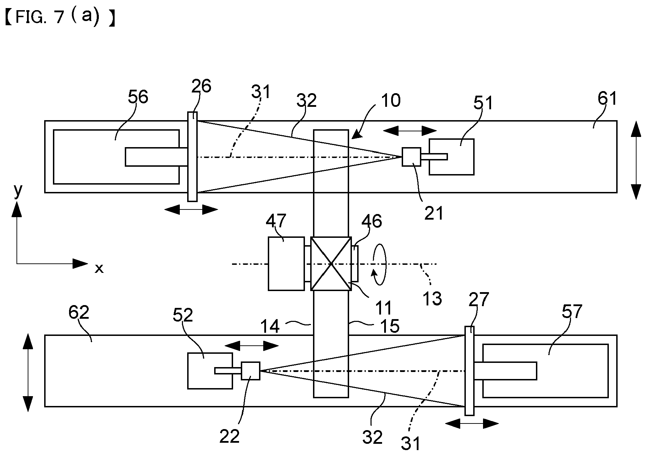

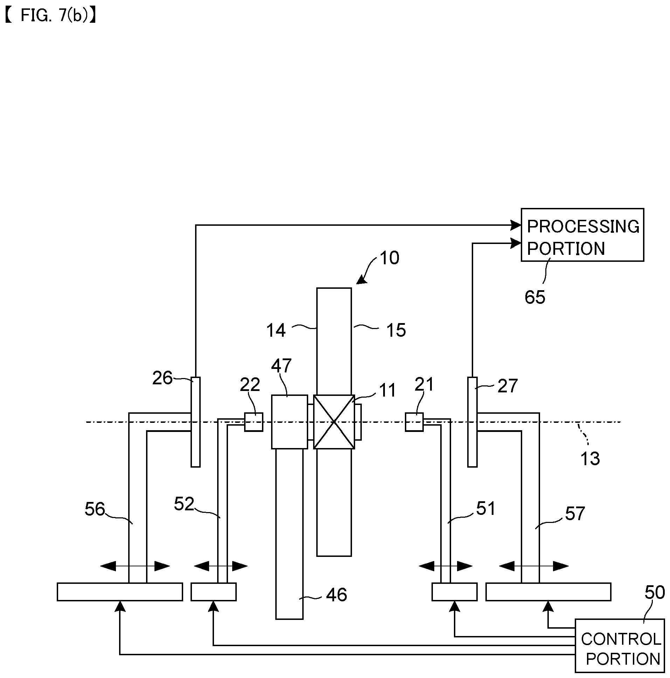

Next, description will be given of a radiation transmission inspection device used for performing the above-described radiation transmission inspection method. Fig. 7 is a diagram showing a first embodiment of the radiation transmission inspection device, wherein Fig. 7 (a) is a plan view and Fig. 7(b) is a front view. A holding portion 46 for detachably holding the film reel 10 as an inspection object on which a long film is wound a plurality of times on the outer peripheral surface of a core 11 is provided. The holding portion 46 holds the film reel 10 via the core 11 such that the central axis 13 of the core 11 is horizontal. The holding portion 46 is also provided with a rotation drive portion 47 for rotating the film reel 10 around the central axis 13.

With one side surface of the film reel as the side end A and the other side surface as the side end B, a radiation source 21 that emits X-rays toward the film reel 10 is provided at a position facing the one side end of the film reel 10, and a detector 26 that detects the X-ray transmitted through the film reel 10 is provided at a position facing the other side end of the film reel 10 and on an extension of the optical axis 31 of the X-ray from the radiation source 21. The radiation source 21 and the detector 26 constitute a first measurement portion. In other words, the first measurement portion includes a first radiation source for emitting radiation arranged to be incident on from the side end A of the film reel, transmitted through the reel, and exited from the side end B, and a first detector for detecting the radiation exited from the side end B. Similarly, a radiation source 22 for irradiating the film reel 10 with X-rays is provided at a position facing the other side end of the film reel 10 and at a position separated from the first detector 21, and a detector 27 for detecting the X-ray transmitted through the film reel is provided at a position facing one side end of the film reel 10 and on an extension of the optical axis 31 of the X-ray from the radiation source 22. The radiation source 22 and the detector 27 constitute a second measurement portion. In other words, the second measurement portion includes a second radiation source for emitting radiation arranged to be incident on from the side end B of the film reel, transmitted through the reel, and exited from the side end A, and a second detector for detecting the radiation exited from the side end A.

Each of the detectors 26 and 27 is configured by a two-dimensional detection device such as an imaging plate. The optical axis 31 of the X-ray in the first measurement portion and the optical axis 31 of the X-ray in the second measurement portion are both parallel to the central axis 13 of the core 11, and these optical axes 31 and the central axis 13 of the core 11 are in the same horizontal plane.

In the following description, a direction parallel to the central axis 13 of the core 11 is referred to as an x direction, and a direction orthogonal to the x direction in a horizontal plane is referred to as a y direction. The radiation sources 21 and 22 are attached respectively to adjustment stages 51 and 52 that move the radiation sources 21 and 22 in the x direction in a horizontal plane while maintaining the heights of the radiation sources 21 and 22. Similarly, the detectors 26 and 27 are attached respectively to adjustment stages 56 and 57 that move the detectors 26 and 27 in the x direction in a horizontal plane while maintaining the heights of the detectors 26 and 27. In the first measurement portion, the FOD (the separation distance between the radiation source and the side end of the film reel 10 facing the radiation source) can be changed by moving the radiation source 21 in the x direction by the adjustment stage 51. By performing at least one of the movement of the radiation source 21 in the x direction by the adjustment stage 51 and the movement of the detector 26 in the x direction by the adjustment stage 56, the FID (the separation distance between the radiation source and the detector) can be changed. Similarly, the FID and the FOD of the second measurement portion can be adjusted. A control portion 50 (not shown in Fig. 7 (a)) for controlling the amount of movement of the adjustment stages 51, 52, 56, 57 is provided, and the control portion 50 preferably performs control so that the FID and the FOD in the first measurement portion and the FID and the FOD in the second measurement portion are equal.

Movement stages 61 and 62 (not shown in Fig. 7(b)) are provided to change the X-ray irradiation position in the radial direction on the film reel 10. The adjustment stages 51 and 56 are attached to the movement stage 61, and the movement stage 61 integrally moves the adjustment stages 51 and 56, to which the radiation source 21 and the detector 26 of the first measurement portion are respectively attached, in the y direction. Similarly, the adjustment stages 52 and 57 are attached to the movement stage 62, and the movement stage 62 integrally moves the adjustment stages 52 and 57, to which the radiation source 22 and the detector 27 of the second measurement portion are respectively attached, in the y direction. At this time, the movement stages 61 and 62 preferably move relative to each other such that the distance from the center of the film reel 10 (that is, the position of the central axis 13 of the core 11) to the optical axis 31 of the radiation in the first measurement portion and the distance 31 to the second measurement portion are always the same.

The radiation transmission inspection device further includes a processing portion 65 that calculates the size of the foreign body detected in the film reel 10 based on the detection results of the detectors 26 and 27 using the principle described with reference to Figs. 4 and 5.

In the radiation transmission inspection device shown in Fig. 7, the FID and the FID of the first measurement portion and the second measurement portion are adjusted by the adjustment stages 51, 52, 56, and 57, the film reel 10 is rotated by the rotation drive portion 47, and furthermore the X-ray irradiation positions in the radial direction of the film reel 10 are changed by the movement stages 61 and 62, such that the radiation transmission inspection method according to the present invention can be performed over the entire film wound on the film reel 10. In this device, the first measurement portion and the second measurement portion whose X-ray irradiation directions are opposite to each other are used, and by simultaneously performing the radiation transmission inspection, without turning over the one side end and the other side end, i.e., the front surface and the back surface, of the film reel 10, the foreign body can be inspected over the entire film wound around the film reel 10 in a short time. In addition, since there is no member that inhibits or attenuates the transmission of X-rays except for the film reel 10 between the radiation source 21 (22) and the detector 26 (27), it is possible to obtain a clear image while suppressing the influence of noise.

(Second embodiment of radiation transmission inspection device)

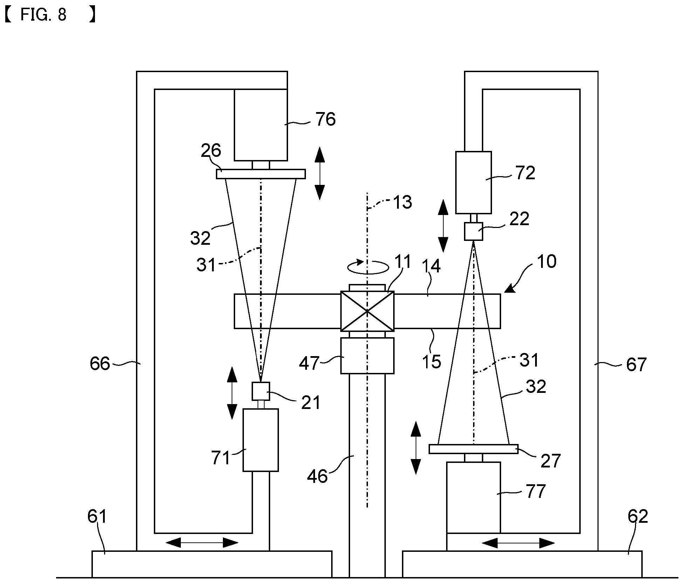

In the radiation transmission inspection device described with reference to Fig. 7, the film reel 10 is held so that the central axis 13 of the core 11 is horizontal, but the film reel 10 can also be configured such that the central axis 13 is vertical. In the radiation transmission inspection device whose front view is shown in Fig. 8, the film reel 10 is detachably held by the holding portion 46 so that the central axis 13 of the core 11 is vertical. At this time, since the optical axis of the X-ray is also vertical, the positions of the radiation sources 21 and 22 and the detectors 26 and 27 cannot be adjusted using the adjustment stages. Therefore, in the radiation transmission inspection device shown in Fig. 8, with respect to the first measurement portion, the radiation source 21 and the detector 26 are attached to face each other via adjustment members 71 and 76, respectively, to both ends of an attachment member 66 formed in a C-shape or U-shape. Similarly, regarding the second measurement portion, the radiation source 22 and the detector 27 are attached via adjustment members 72 and 77, respectively, to both ends of a C-shaped or U-shaped attachment member 67. The adjustment members 71, 72, 76, and 77 are for adjusting the FID and the FOD, and are controlled by the control portion 50 (not shown in Fig. 8) as in the device of Fig. 7. Then, the movement stages 61 and 62 move the attachment members 66 and 67 in the radial direction of the film reel 10, respectively. Also in the radiation transmission inspection device shown in Fig. 8, a foreign body in the film reel 10 can be detected in the same manner as in the radiation transmission inspection device shown in Fig. 7. Further, a processing portion for calculating the size of the foreign body based on the detection results of the detectors 26 and 27 may be provided. Also in this example, since there is no member that inhibits or attenuates the transmission of X-rays except for the film reel 10 between the radiation source 21 (22) and the detector 26 (27), it is possible to obtain a clear image while suppressing the influence of noise. Accordingly, in the second embodiment, a table-shaped member on which a portion of the film reel 10 through which the X-rays transmit is placed may be used as the holding portion 46. In this case, however, the detector 26 (27) detects a transmitted image of the table as a background signal, which leads to a reduction in the S/N ratio. Therefore, the configuration of holding the central axis 13 of the film reel 10 as described above is preferable.

(Third embodiment of radiation transmission inspection device)

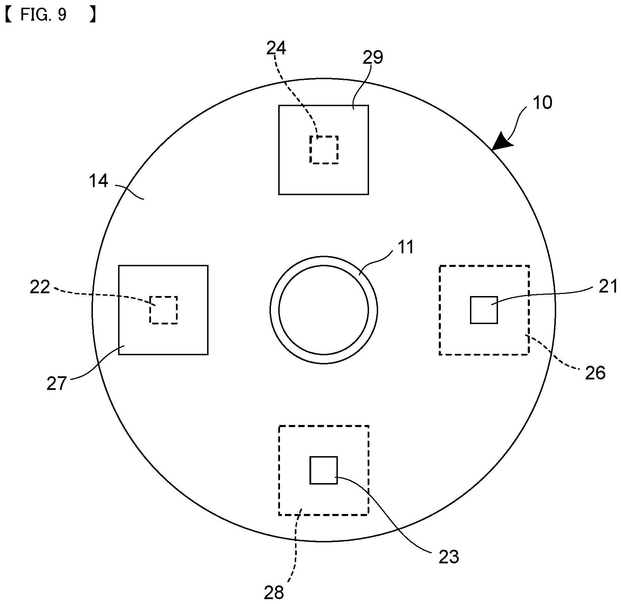

The radiation transmission inspection device shown in Fig. 7 includes two measurement portions: the first measurement portion including the radiation source 21 and the detector 27, and the second measurement portion including the radiation source 22 and the detector 27. However, with the radiation transmission inspection device according to the present invention, the inspection time can be further reduced by further increasing the number of measurement portions and simultaneously performing the foreign body detection process. Fig. 9 shows a radiation transmission inspection device having additional two measurement portions with respect to the device shown in Fig. 7 to have a total of four measurement portions. In Fig. 9, in order to clarify the arrangement of the radiation sources and the detectors, as a side view viewed from one side end of the film reel 10, only the film reel 10 including the core 11, the radiation sources 21 to 24, and the detectors 26 to 29 are shown. The elements shown by the broken lines in the drawing are located on the other side end side of the film reel 10 and are hidden behind the film reel 10 when viewed from one side end side.

In the radiation transmission inspection device shown in Fig. 9, it is assumed that the first measurement portion and the second measurement portion are already provided as shown in Fig. 7, and at a position facing one side end of the film reel 10 and at a position separated from the radiation source 21 and the second detector 27, the radiation source 23 for irradiating the film reel 10 with X-rays is provided. The detector 28 for detecting X-rays transmitted through the film reel 10 is provided at a position facing the other side end of the film reel 10 and on an extension of the optical axis of the X-rays from the radiation source 23. The radiation source 23 and the detector 28 constitute the third measurement portion. Further, at a position facing the other side end of the film reel 10 and at a position separated from the radiation source 22 and the detectors 26 and 28, the radiation source 24 for irradiating the film reel 10 with radiation is provided. The detector 29 for detecting X-rays transmitted through the film reel 10 is provided at a position facing one side end of the reel 10 and on an extension of the optical axis of the X-rays from the radiation source 24. The radiation source 24 and the detector 29 constitute the third measurement portion. The first measurement portion, the second measurement portion, the third measurement portion, and the fourth measurement portion are configured to have the same FID.

In particular, in the radiation inspection device shown in Fig. 9, each measurement portion may have the same FOD to narrow the scanning range of each measurement portion and shorten the inspection time as a whole. However, when this device is configured such that the first measurement portion and the second measurement portion have the same FOD, the third measurement portion has a larger FOD than the first measurement portion, and the fourth measurement portion has a larger FOD than the second measurement portion, it becomes possible to perform a method for detecting a foreign body by dividing the range between the side end and the intermediate position in the thickness direction into a plurality of regions in the thickness direction described with reference to Fig. 6.

(Fourth embodiment of radiation transmission inspection device)

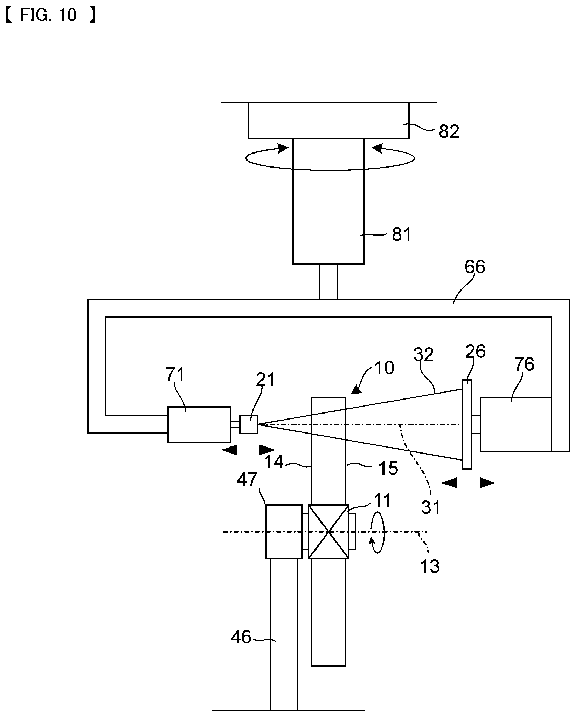

The radiation transmission inspection device shown in Figs. 7, 8, and 9 has a plurality of measurement portions each including a radiation source and a detector. However, in some cases, a plurality of measurement portions cannot be used. If only one measurement portion can be used, some switching mechanism is required to switch between X-ray irradiation from one side end of the film reel 10 and X-ray irradiation from the other side end. Fig. 10 shows a radiation transmission inspection device including one measurement portion and a switching mechanism.

A holding portion 46 for detachably holding the film reel 10 via the core 11 is provided so that the central axis 13 of the core 11 is horizontal. The holding portion 46 is also provided with a rotation drive portion 47 for rotating the film reel 10 around the central axis 13. A radiation source 21 for irradiating the film reel 10 with X-rays is provided at a position facing one side end of the film reel 10, and a detector 26 for detecting X-rays transmitted through the film reel 10 is provided at a position facing the other side end of the film reel 10 and on an extension of the optical axis 31 of the X-ray from the radiation source 21. The optical axis 31 is set to be parallel to the central axis 13 of the core 11. The radiation source 21 and the detector 26 constitute a measurement portion. Here, the radiation source 21 and the detector 26 are attached to face each other via adjustment members 71 and 76, respectively, to both ends of an attachment member 66 formed in a C-shaped or U-shaped. The adjustment members 71 and 76 are for adjusting the FID and the FOD. In order to move the position of the optical axis 31 in the radial direction of the film reel 10, an up-and-down movement portion 81 for moving the attachment member 66 in an up-and-down direction in the drawing is provided, and the attachment member 66 is connected to be suspended from the up-and-down movement portion 81. Further, a switching portion 82 is provided to rotate the radiation source 21 by 180° relative to the film reel 10 about an axis perpendicular to the central axis 13 of the core 11. For example, the switching portion 82 is attached to the ceiling of the space where the radiation transmission inspection device is provided, and the upper end of the up-and-down movement portion 81 is connected to the switching portion 82.

With the radiation transmission inspection device shown in Fig. 10, the FOD and the FID are adjusted by the adjustment members 71 and 76, the film reel 10 is rotated by the rotation drive portion 47, and the X-ray irradiation position of the film reel 10 is changed in the radial direction by the up-and-down movement portion 81, such that the entire film wound on the film reel 10 can be operated with X-rays. In order to carry out the radiation transmission inspection method according to the present invention, the side on which the X-rays are incident on the film reel 10 must be turned over. For that purpose, it is sufficient if the attachment member 66 is pulled up by the up-and-down movement portion 81 to a position where the radiation source 21 and the detector 26 do not mechanically interfere with the film reel 10, then the orientation of the attachment member 66 is rotated by 180° in a horizontal plane by the switching portion 82, and after the rotation, the attachment member 66 is again lowered and next irradiation is performed.

The radiation transmission inspection device shown in Fig. 10 requires only one radiation source and one detector, and is an effective device when the cost of the radiation source and the detector becomes an issue.

(Method for manufacturing microporous film)

Next, a method for manufacturing a microporous film for determining the quality by the above-described radiation transmission inspection method will be described. When manufacturing a polyolefin microporous film as a microporous film, first, a plasticizer such as liquid paraffin is added to a polyolefin resin, and these are melt-kneaded by a twin-screw extruder or the like to obtain a polyolefin solution. Then, the polyolefin solution is discharged using a die such as a T-die, and cooled by a cast cooling device or the like to obtain a gel-like sheet. The gel-like sheet is stretched in the machine direction (MD) and the width direction (TD) to form a stretched sheet, and thereafter, the plasticizer is dissolved and removed from the stretched sheet using a cleaning solvent or the like to obtain a microporous film. The microporous film film is obtained as a long film by performing the continuous process from the discharge of the polyolefin solution to the dissolution and removal of the plasticizer. The microporous film film is wound around the outer peripheral surface of the core 11, and the film reel 10 is obtained. Then, any one of the above-described radiation transmission inspection methods is performed to inspect a foreign body contained in the film reel 10. Products determined to be acceptable products as a result of the inspection are shipped.

INDUSTRIAL APPLICABILITY

The manufacturing process to which the inspection method of the present invention is applied is not limited to a polyolefin battery separator film, but it is also suitable for a manufacturing process of a coating separator, a nonwoven fabric battery separator, a capacitor film, an MLCC release film, a polyolefin microporous film used for high precision filtration applications, and the like.

DESCRIPTION OF REFERENCE SIGNS

| | |
|---|---|
| 10: | Film reel |
| 11: | Core |
| 12: | Film |
| 13: | Axis of core |
| 14: | Side end A of film reel |
| 15: | Side end B of film reel |
| 16: | Side end D of film reel |
| 21: | First radiation source |
| 22: | Second radiation source |
| 23: | Third radiation source |
| 24: | Fourth radiation source |
| 26: | First detector |
| 27: | Second detector |
| 28: | Third detector |
| 29: | Fourth detector |
| 31: | Optical axis |
| 32: | X-ray irradiation range |
| 41: | Foreign body |
| 42: | Image |

| 46: | Holding portion |
|---|---|
| 47: | Rotation drive portion |
| 50: | Control portion |
| 51, 52, 56, 57: | Adjustment stage |
| 61, 62: | Movement stage |
| 65: | Processing portion |
| 66, 67: | Attachment member |
| 71, 72, 76, 77: | Adjustment member |
| 81: | Up-and-down movement portion |
| 82: | Switching portion |
| C: | Center position in thickness direction of film reel |
| T: | Thickness of film reel |

## Claims

1. A radiation transmission inspection method for inspecting a film reel including a long film wound on an outer peripheral surface of a core a plurality of times, wherein one side surface of the reel is a side end A and another side surface is a side end B, the method comprising:

   a first foreign body detection process in which radiation emitted from a first radiation source, incident from the side end A of the film reel, transmitted through the film reel, and exited from the side end B is detected by a first detector, and information regarding a foreign body is obtained; and
   a second foreign body detection process in which radiation emitted from a second radiation source, incident from the side end B of the film reel, transmitted through the film reel, and exited from the side end A is detected by a second detector, and information regarding the foreign body is obtained.

2. The radiation transmission inspection method according to claim 1, wherein a distance (FID) between the first radiation source and the first detector is equal to a distance (FID) between the second radiation source and the second detector, and
   a distance (FOD) between the first radiation source and the side end A is equal to a distance (FOD) between the second radiation source and the side end B.

3. The radiation transmission inspection method according to claim 2, wherein the FID and the FOD satisfy Formula (1)

$$0.2 \leq (T + 2FOD)/2FID \leq 0.5 \cdots (1)$$

   where T represents a thickness of the film reel.

4. The radiation transmission inspection method according to any one of claims 1 to 3, wherein position information of the foreign body and a size of the foreign body mixed in the film reel are determined from foreign body information obtained from the first foreign body detection process and foreign body information obtained from the second foreign body detection process.

5. The radiation transmission inspection method for a foreign body according to any one of claims 1 to 4, wherein the first foreign body detection process and the second foreign body detection process are performed simultaneously.

6. The radiation transmission inspection method according to any one of claims 1 to 4, wherein the first radiation source is used as the second radiation source.

7. The radiation transmission inspection method according to claim 2 or 3, further comprising:

   a third foreign body detection process in which radiation emitted from a third radiation source, incident from the side end A of the film reel, transmitted through the reel, and exited from the side end B is detected by a third detector, and information regarding the foreign body is obtained; and
   a fourth foreign body detection process in which radiation emitted from a fourth radiation source, incident from the side end A of the film reel, transmitted through the reel, and exited from the side end B is detected by a fourth detector, and information regarding the foreign body is obtained,
wherein
a distance (FOD) between the third radiation source and the side end A and a distance (FOD) between the fourth radiation source and the side end B are distances different from the distance (FOD) between the first radiation source and the side end A and the distance (FOD) between the second radiation source and the side end B.

8. The radiation transmission detection method according to any one of claims 1 to 6, further comprising a process of calculating a size of the foreign body on the basis of information obtained from the first foreign body detection process and information obtained from the second foreign body detection process.

9. A radiation transmission inspection device capable of inspecting a film reel including a long film wound on an outer peripheral surface of a core a plurality of times, wherein one side surface of the reel is a side end A and another side surface is a side end B, the device comprising:

a holding portion configured to grip the core of the film reel;
a first measurement portion including a first radiation source for emitting radiation arranged to be incident from the side end A of the film reel, transmitted through the reel, and exited from the side end B, and a first detector for detecting the radiation exited from the side end B; and
a second measurement portion including a second radiation source that is provided at a position separated from the first detector and is arranged so that radiation is incident from the side end B of the film reel, transmitted through the reel, and exited from the side end A, and a second detector for detecting radiation exited from the side end A.

10. The radiation transmission inspection device according to claim 9, further comprising:

an adjustment portion for adjusting a position of the radiation source and the detector of the first measurement portion and a position of the radiation source and the detector of the second measurement portion; and
a control portion for adjusting positions such that a distance (FOD) between the first radiation source and the side end A and a distance (FOD) between the second radiation source and the side end B become equal, and a distance (FID) between the first radiation source and the detector and a distance (FID) between the second radiation source and the detector become equal.

11. The radiation transmission inspection device according to claim 9 or 10, further comprising a movement portion for moving the first measurement portion and the second measurement portion in a radial direction of the film reel.

12. The radiation transmission inspection device according to claim 11, wherein the movement portion is a mechanism for moving the first measurement portion and the second measurement portion such that a distance to the first measurement portion and a distance to the second measurement portion from a center of the film reel in a thickness direction are always equal.

13. The radiation transmission inspection device according to any one of claims 9 to 12, comprising a rotation mechanism for relatively rotating the first measurement portion and the second measurement portion about an axis of the film reel such that the film reel can be scanned by radiation along a circumferential direction of the film reel.

14. The radiation transmission inspection device according to any one of claims 9 to 13, further comprising a processing portion for calculating a size of a detected foreign body on the basis of a detection result detected by the first measurement portion and a detection result detected by the second measurement portion.

15. The radiation transmission inspection device according to claim 9, further comprising:

a third measurement portion including a third radiation source for emitting radiation arranged to be incident from the side end A of the film reel, transmitted through the reel, and exited from the side end B, and a third detector for detecting the radiation exited from the side end B; and
a fourth measurement portion including a fourth radiation source that is provided at a position separated from the third detector and is arranged so that radiation is incident from the side end B of the film reel, transmitted through the reel, and exited from the side end A, and a fourth detector for detecting radiation exited from the side end A,

wherein

a separation distance between the radiation source and the detector is FID, and a separation distance between the radiation source and the side end A of the film reel is FOD,

FID of the third measurement portion is equal to FID of the first measurement portion, FOD of the third measurement portion is larger than FOD of the first measurement portion, FID of the fourth measurement portion is equal to FID of the second measurement portion, FOD of the fourth measurement portion is larger than FOD of the second measurement portion, and FOD of the third measurement portion and FOD of the fourth measurement portion are equal.

16. The radiation transmission inspection device capable of inspecting a film reel including a long film wound on an outer peripheral surface of a core a plurality of times according to any one of claims 9 to 15, comprising:

a holding portion for gripping the core of the film reel;

a measurement portion including a radiation source for emitting radiation arranged to be incident from one side end of the film reel, transmitted through the reel, and exited from another side end, and a detector for detecting the radiation exited from the other side end; and

a switching portion for moving at least one of the measurement portion and the film reel so as to relatively rotate the film reel by 180° relative to the radiation source about an axis perpendicular to an axis of the core.

17. A method for manufacturing a film reel, the method comprising a process of obtaining a film reel by winding a long film on a core; and a foreign body detection process of inspecting a foreign body contained in the film reel by the radiation transmission inspection method according to any one of claims 1 to 8.

18. The method for manufacturing a film reel according to claim 17, wherein the film is a polyolefin microporous film.

【 FIG. 1 】

【 FIG. 2(a)】

【 FIG. 2(b)】

【 FIG. 2(c)】

【 FIG. 3(a)】

DETECTION SENSITIVITY
:20μm
FIELD OF VIEW
:3.5mm×2mm

DETECTION SENSITIVITY
:100μm
FIELD OF VIEW
:17.5mm×10mm

【FIG. 3(b)】

DETECTION SENSITIVITY
:60μm
FIELD OF VIEW
:10.5mm×6mm

DETECTION SENSITIVITY
:100μm
FIELD OF VIEW
:17.5mm×10mm

【 FIG. 4 】

（a）

A₁

（b）

【 FIG. 5 】

THICKNESS OF REEL : 60mm
FID : 200mm
FOD : 20mm

【 FIG. 6(a) 】

|  | DISTANCE FROM RADIATION SOURCE (mm) | DETECTION SENSITIVITY (μm) | FIELD OF VIEW SIZE (mm) |
|---|---|---|---|
| D | 20 | 40 | 20 |
| E | 50 | 100 | 50 |
| C | 80 | 160 | 80 |

【 FIG. 6(b)】

| | DISTANCE FROM RADIATION SOURCE (mm) | DETECTION SENSITIVITY (μm) | FIELD OF VIEW SIZE (mm) |
|---|---|---|---|
| D | 50 | 100 | 50 |
| E | 80 | 160 | 80 |
| C | 110 | | |

【FIG. 7（a）】

【 FIG. 7(b)】

【 FIG. 8 】

【 FIG. 9 】

【 FIG. 10 】

**EP 3 816 616 A1**

<table>
<tr><td colspan="2">INTERNATIONAL SEARCH REPORT</td><td colspan="2">International application No.<br>PCT/JP2019/025288</td></tr>
</table>

**A. CLASSIFICATION OF SUBJECT MATTER**
Int.Cl. G01N23/16(2018.01)i

According to International Patent Classification (IPC) or to both national classification and IPC

**B. FIELDS SEARCHED**

Minimum documentation searched (classification system followed by classification symbols)
Int.Cl. G01N23/00-23/2276

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2018-92890 A (SUMITOMO CHEMICAL CO., LTD.) 14 June 2018 & US 2018/0159102 A1 & CN 108132262 A | 1-18 |
| A | JP 2010-127702 A (KYOCERA CHEMICAL CORP.) 10 June 2010 (Family: none) | 1-18 |
| A | JP 2004-354215 A (IHI AEROSPACE CO., LTD.) 16 December 2004 (Family: none) | 1-18 |
| A | WO 2016/203330 A1 (DYLOG ITALIA S.P.A.) 22 December 2016 & US 2018/0356352 A1 & EP 3311148 A1 | 1-18 |

☐ Further documents are listed in the continuation of Box C.      ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    13 August 2019 (13.08.2019) | Date of mailing of the international search report<br>    27 August 2019 (27.08.2019) |
|---|---|
| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015044602 A

- JP 63021039 A